# EUROPEAN PATENT SPECIFICATION

(11) **EP 1 963 051 B1**
(45) Date of publication and mention of the grant of the patent: **02.02.2011**
(21) Application number: 06808383.1
(22) Date of filing: 02.11.2006
(51) Int. Cl.: B24C 5/04, B24C 1/04, B23K 35/00

(54) **NOZZLE ASSEMBLY**
DÜSEN-ANORDNUNG
ARRANGEMENT DE BUSE

(30) Priority: 03.11.2005 GB 0522444
(43) Date of publication of application: 03.09.2008
(73) Proprietor: Finecut Ab, 517 22 Bollebygd (SE)
(72) Inventor: MILLER, Donald, Stuart, Bedfordshire MK43 7DG (GB)
(74) Representative: Börlin, Maria
(86) International application number: PCT/GB2006/004084
(87) International publication number: WO 2007/052027

(56) References cited:
- CH-A- 377 674
- US-A- 4 233 785
- US-A- 5 152 449
- US-A1- 2003 133 826
- US-A1- 2005 230 152

## Description

The present invention relates to cutting heads that generate abrasive waterjets using abrasive particles carried to a cutting head.

Prior art abrasive waterjet cutting heads, known as AWJ cutting heads, discharge ultra high-pressure water at 4000 bar (400 MPa) or so through an orifice to form a waterjet travelling at over twice the speed of sound in air. A waterjet is projected 40 to 80 waterjet jet diameters across a chamber to enter a focus tube bore. Abrasive particles suspended in air are induced into a chamber by a waterjet dragging air with abrasive particles into a focus tube entryway and bore. Momentum is transferred from a waterjet to abrasive particles in a focus tube to produce a cutting jet at a tube outlet.

Transient events during closing of a shut off valve to stop a high velocity waterjet cause a momentary reversal of water/air flow in a waterjet orifice that can carry abrasive particles through an orifice. On restating water flow such particles pass through an orifice at high speed and can erode an orifice and a particle impacting on an orifice edge can cause an orifice to fail. Catastrophic edge damage also occurs from particles reaching an orifice in pressurised water. What is particularly troublesome is that failures are unpredictable and cause serious financial and production losses.

A waterjet orifice is located in the front face of a substantial carrier that can withstand ultra high water pressures. Water pressure acts to force an orifice onto a carrier and seal an orifice to a carrier. The number of abrasive particles reaching the vicinity of a waterjet orifice can be greatly reduced by projecting a waterjet for ten or so jet diameters along a narrow passageway in a carrier before a jet enters a chamber.

The risk of abrasive particles damaging a waterjet orifice is minimised by turning off an abrasive flow to a cutting head some time before stopping a waterjet so as to clear abrasive from a cutting head. Because of re-circulation of air and abrasive within a cutting head chamber a significant time delay is needed to clear abrasive from a cutting head. This time delay, combined with a time delay to establishing abrasive flow after a waterjet is turned on, prevents prior art abrasive waterjets being used for machining operations that requires a cutting jet to be turned on and off rapidly and this excludes their use for many applications.

US 2005/0017091 describes an AWJ cutting head in which air is drawn from atmosphere to the passageway downstream of an orifice in order to avoid air carrying abrasive particles reaching a waterjet orifice. Although providing such airflow can prevent abrasive particles reaching and damaging an orifice and its holder it complicates the design of a cutting head and adversely affects the amount of air available to carry abrasive particles to a cutting head.

GB2422566A describes a method of generating abrasive waterjets that uses steam as a carrier fluid to transport abrasive particles to a cutting head for the steam to be condensed in a focus tube. Condensing steam, prior to a focus tube inlet, may need to be minimised in such cutting heads and this requires a focus tube inlet to be within 20 or so waterjet diameters of a waterjet generating means. Abrasive suspended in steam flows over the outlet face of a waterjet generating means. Because abrasive particles are in direct contact with a waterjet generating means particles are carried upstream of the waterjet generating means during flow transients on stopping water flow and when steam carrying abrasive particles flows to a cutting head when there is no water flow through a waterjet generating means.

To generate abrasive waterjets with diameters less than 300µm or so by entrainment of abrasive particles into a high-speed waterjet it is necessary to suspend abrasive particles in water flowing to a cutting head rather than dynamically carrying particles in flowing air as used for AWJ cutting heads. Entraining abrasive suspended in water into a high speed waterjet has not been exploited for precision machining because of poor cutting head performance.

The geometries of prior art cutting heads that use water as the abrasive carrier fluid, induce adverse fluid dynamic interactions between a waterjet and dense abrasive/water mixture before mixture enters a focus tube bore. A requirement to avoid adverse fluid dynamic interactions is for the outlet of a waterjet generating means to be within 20 or so waterjet diameters of a focus tube inlet. This causes abrasive particles to flow over the outlet of a waterjet generating means resulting in abrasive particles reaching the inlet side of a waterjet generating means when water flow is stopped and when abrasive mixture enters a cutting head without pressurised water flowing through a waterjet generating means.

It is particularly important that a cutting head using abrasive/water mixtures has a waterjet generating means that is able to pass abrasive suspensions without undue wear. The abrasive for these cutting heads is statically suspended in water so cannot be easily cleared from the vicinity of a waterjet generating means before stopping of a water flow. Instead the continuing presence of abrasive is beneficial because a cutting jet can be started and stopped multiple times per second to carry out dynamic machining operations. When a cutting head is operated in a dynamic cutting mode, controlled penetration of abrasive into a waterjet generating means can be an advantage in that cutting begins instantaneously on re-starting water flow avoiding distortion, cracking and de-lamination of thin and fragile workpiece materials.

An AWJ cutting head projects a waterjet a distance of 40 to 80 waterjet diameters across a chamber to drag air at sub-atmospheric pressure towards a focus tube inlet. In order to drag sufficient air into a focus tube substantially more air is caused to flow towards a focus tube than enters a focus tube. Excess air moving towards a focus tube re-circulates energetically in a chamber carrying with it abrasive particles that erode chamber walls and waterjet orifice holders. Re-circulating air may contain particles that have become wetted by water droplets. Because of particle wetting, abrasive particles may attach to the passage walls within an orifice and its holder and be displaced through an orifice when water/airflow reverses on turning off water flow.

The cutting performance of AWJ cutting heads can be improved and chamber and focus tube wear reduced if air, dragging abrasive particles along with it, enters a focus tube driven by a controllable pressure difference. A static pressure of one bar or so above atmospheric pressure causes air to accelerate to sonic velocity at the start of a focus tube bore. Efficient acceleration of air and abrasive particles into a focus tube requires the distance between the outlet of a waterjet generating means and a focus tube inlet to be the minimum necessary for abrasive particles to flow smoothly into a focus tube inlet. This results in abrasive particles flowing over the outlet of a waterjet generating means, and penetrating upstream of the waterjet generating means when water flow is stopped.

Diamond has a substantially longer life than other superhard materials when used for a waterjet generating means. A prior art waterjet orifice made of diamond may be set in sintered metal within a carrier. Bonding between sintered metal and diamond is poor and sintered metal is relatively weak in tension so the retention and sealing of a piece of diamond relies on the support provided to the sintered metal by a carrier made of steel or other strong metal. Encasing diamond or other superhard material in sintered metal is not satisfactory for abrasive waterjet cutting heads describe in this patent application because there is insufficient space between a waterjet generating means and a focus tube to adequately support and protect the sintered metal from erosion.

Thus there are several advantages in being able to provide a waterjet generating means that can pass abrasive and other particles without damage, the means being located, attached and sealed to the outlet of a carrier. In this patent application it is described how a waterjet nozzle that is not easily damaged when passing abrasive particles is attached and sealed to the outlet of a carrier so as to withstand water pressures that can exceed 4000bar. Additionally said waterjet generating means may cover the face of its carrier such that abrasive particles are prevented from damaging the carrier.

Document US 2005-0230152 discloses a nozzle assembly according to the preamble of claim 1. According to a first aspect of the present invention, there is provided a nozzle assembly according to claim 1.

Advantageously, said profiled bore tapers from a first end connected to the passage means to a second end adapted to emit the jet.

At least part of said joint means may extend substantially normally to a longitudinal axis of the passage means.

Preferably, an area of the joint means is at least about ten times a cross-sectional area of the passage means at a point where the passage means and the bore meet, optionally at least twenty times said cross-sectional area.

The superhard material has a Mohs hardness of 9 to 10.

Advantageously the superhard material comprises diamond, cubic boron nitride, boron carbide, tungsten carbide, silicon carbide or aluminium oxide.

The superhard material may comprise at least one of polycrystalline diamond, monocrystalline diamond, natural diamond or diamond produced by chemical vapour deposition.

Preferably, the nozzle element comprises a block of diamond or other superhard material.

Advantageously, said superhard block is provided with a coating of a material reactively bonded thereto, optionally a metal such as titanium or a rare earth element such as lutetium.

Said superhard block may be integrally bonded to a support element of tungsten carbide or other superhard material, the support element being mounted to the carrier means by said joint means.

Said superhard block may be provided with casing means of hard metal or a different superhard material, said joint means connecting both the casing means and the superhard block to the carrier means.

The superhard material may comprise a coating, preferably a diamond coating, supported on a nozzle element body, optionally with said coating covering an interior surface of the profiled bore and a surface of the nozzle element facing away from the carrier means.

The superhard material coating may be grown by chemical vapour deposition on to a former having the desired shape of the profiled bore so as to form a thick film, the former then etched away and superhard material or metal deposited on the thick film to produce the nozzle element body.

Preferably, said joint means comprises a ductile filler metal, reactively bonded to the nozzle element and reactively or metallically bonded to the carrier means.

Advantageously, the joint means comprises an active solder comprising a tin-silver-titanium alloy, optionally doped with other metals and/or active rare earth elements such as lutetium, erbium and cerium..

The joint means may comprise an active solder comprising a zinc-silver-aluminium alloy, optionally doped with other metals and/or active rare earth elements.

The joint means may comprise an active braze comprising a silver-copper-titanium base, optionally doped with other metals and/or rare earth elements such as hafnium and zirconium.

The carrier means preferably comprises a material having a thermal expansion coefficient similar to that of the diamond or other superhard material of the nozzle element.

Advantageously, said material of similar thermal expansion comprises a lamina to which the nozzle element is soldered or brazed, the lamina being soldered or brazed to a remainder of the carrier means with a solder or braze having a higher melting temperature than that used to mount the nozzle element thereto.

According to a second aspect of the present invention, there is provided a method according to claim 14.

The bore in said piece of superhard material is generally contracting from an inlet that receives pressurised water to an outlet from which water is discharged as a high velocity waterjet.

Examples of nozzles and cutting heads embodying the present invention will now be described by way of example and with reference to the accompanying drawings, in which:
**Figures 1a** to **1e** show nozzle assemblies;
**Figures 2** and **3** show entrainment cutting heads;
**Figure 4** shows a spacer;
**Figure 5** shows an abrasive suspension cutting head;
**Figures 6** and **7** show entrainment cutting heads; and
**Figure 8** shows a prior art cutting head.

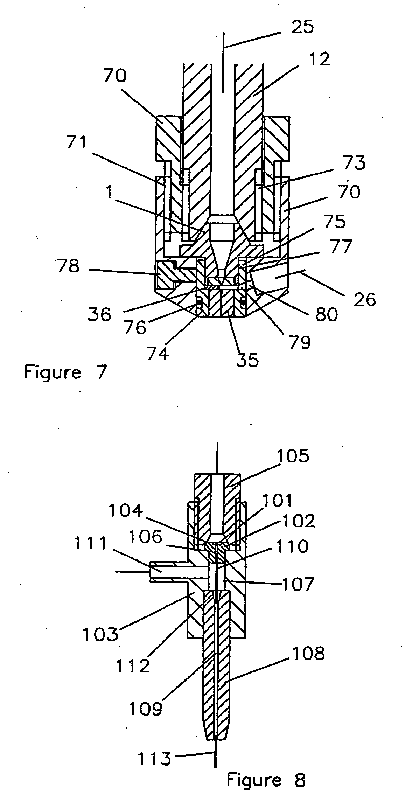

Referring first to Figure 8, for understanding of the prior AWJ art, a waterjet orifice 101 is located and sealed in the front face of a substantial carrier 102 that is located within a cutting head body 103. A seat 104 on the carrier 102 mates and forms a metal to metal seal with a tube 105 feeding ultra high pressure water to orifice 101. Water flowing through the orifice contracts to form a jet 110. The waterjet 110 passes through a central passageway 106 in carrier 102 before traversing a chamber 107 and entering a bore 109 of a focus tube 108. The drag caused by waterjet 110 passing through chamber 107 causes air dragging abrasive particles with it to enter through passageway 111 and to be accelerated towards and enter the focus tube 108. The quantity of air moving towards focus tube inlet 112 is greater than that that can enter bore 109 and the excess air re-circulates within chamber 107, carrying abrasive particles, in an unstable manner with strong swirl components. In the focus tube bore 109 momentum is transferred from the waterjet to abrasive particles to produce a cutting jet 113.

Orifice 101 is made of sapphire, ruby or diamond. Sapphire, ruby and diamond are extremely hard but also brittle, so an orifice's edge can be damaged by particles moving at high velocity. Locating orifice 101 such that a waterjet 110 passes through a narrow passage 106 substantially reduces the risk of abrasive particles reaching the vicinity of an orifice and travelling upstream of an orifice during transient events when water flow is stopped.

An advantageous feature of prior art is the location of the waterjet generating means 101 on the front face of a carrier 102 so that water pressure acts to hold and seal the means to the carrier. A further advantageous feature of prior art cutting heads is the size of piece of diamond need only be sufficient to carry water pressure compression loads so that it is economic to use high quality natural or synthetic diamond.

However, with a waterjet generating means on the front face of a carrier it is not possible to prevent adverse fluid dynamic processes in cutting heads or to induce desirable fluid dynamic processes. Adverse fluid dynamic processes are so severe that prior art entrainment cutting heads do not function effectively with abrasive carried in water or in steam.

It is now described how a waterjet generating nozzle made from diamond or other superhard material, with a shaped bore that is not readily damaged by abrasive particles, is attach and sealed to the outlet of a carrier to withstand water pressures that can exceed 400MPa. A loading of 400Mpa is ten or so times the tensile strength of joining methods for diamond to metal or other superhard materials. Taking account of the extreme fatigue loads from cyclic water pressures a joint area twenty or so times the nozzle area subjected to water pressure is desirable. Critically, to prevent pressurised water entering a joint and thereby increasing the fluid loading on a joint, the joint material must form water impervious seal between a carrier and a nozzle.

Joining superhard materials to a metal or other superhard material by soldering or brazing is known in the art. However, the extreme tensile loading caused by ultra high water pressures and catastrophic increases in loading if water penetrates into a joint means that experimentation is required to establish soldering and brazing methods for each combination of waterjet nozzle material with carrier material. Diamond is preferred for its wear characteristics but stronger joints can be made with tungsten carbide and other superhard materials and these materials can be easier to machine to produce nozzle bores as well as easier to solder or braze. Therefore, it is desirable to select a superhard nozzle material based on many factors.

For clarity superhard materials are here defined as materials having a hardness of 9 or higher on the Mohs scale.

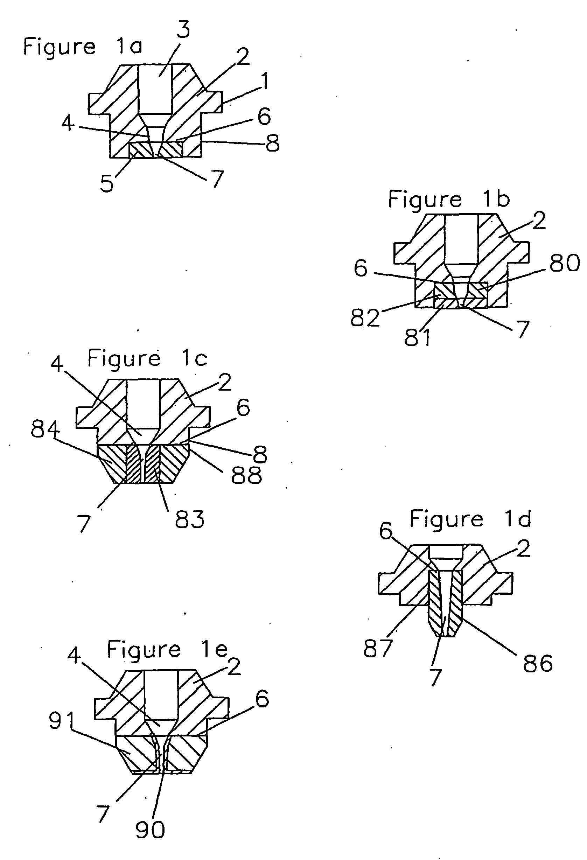

Referring now to Figure 1a, showing a nozzle assembly embodying the present invention, a waterjet nozzle 1 has a carrier 2 with an inlet 3 to passage 4 that contracts to a shaped bore 7 in a piece of diamond material in the form of a blank that forms a nozzle 5. The nozzle 5 is joined and sealed to carrier 2 by a joint 6. In order to minimise the fluid loading on a joint 6 the outlet diameter of the flow passage 4 in the carrier 2 will usually be chosen to be the smallest practical consistent with water velocities being below the erosion velocity of the material of the carrier 2 and the need to carrying out drilling and polishing operations to form the nozzle bore 7.

The joint 6 between a diamond blank 5 and a nozzle carrier 2 is effected using a solder or braze alloy that is doped with active elements. An example of such a solder is a tin (Sn)-silver (Ag) alloy with active elements titanium (Ti), gallium (Ga) and cerium (Ce). An example of active braze is a silver (Ag)-copper (Cu) alloy with titanium (Ti) and other active elements. The active elements react with oxide layers and surfaces to allow wetting. A good joint has extensive chemical bonding between solder or braze material, diamond and carrier material, with minimal formation of undesirable interfacial compounds and brittle and other joint weakening layers.

Although solders are generally defined as having melting points below about 450°C, it can be advantageous to carry out part of a soldering cycle at higher temperatures. In such cases, temperatures up to 850°C or so may be used to bring about wetting, before reducing the temperature to form a joint that has lower residual thermally induced stresses than that generated by a brazed joint (brazing of superhard materials generally involves solidus temperatures above 700°C).

The carrier 2 can be fully machined before the nozzle 5 blank is attached, with the joint face on a carrier having a machined surface texture to maximise joint strength. Brazing of batches of nozzles is normally carried out in a vacuum or inert gas furnace. A solder or braze preform cut from foil is positioned between a holder 2 and diamond blank 5. A soldering or brazing temperature/time cycle is used that ensures good joint properties and minimises residual stresses in the brittle diamond. Brazing provides stronger joints and is preferred for joining diamond that is thermally stable at brazing temperatures above 800°. Ultrasonic or other vibration means may be used to help in achieving a satisfactory joint.

Solder and braze materials have poor capillary and wetting characteristics on diamond and wetting is time dependent. The poor wetting characteristic may be used as an indicator of successful joint formation. The central hole in a solder or braze resist is machined marginally larger than the outlet of passage 4. After a solder or braze cycle the successful flow of joint material to form the critical seal between a joint 6 and carrier passage bore 4 can be observed.

It is advantageous not to polish the growth side of CVD diamond and to use the rough growth surface of the diamond as the joint surface in order to increase joint bond area.

For quality control and to minimise costs it is desirable to have only one operation in producing a joint that can withstand extreme pressures and fatigue loading. However, if problems arise in making joints with particular diamond nozzle blanks 5, the blanks may be pre-coated with a titanium-based or other coating that forms a reacted chemical bond with the blank and is wetted during soldering or brazing. Alternatively, a blank may be pre-coated by a chemical vapour deposition process with tungsten carbide or other suitable material that aids in the formation of a joint to a carrier.

For generating waterjets up to 400µm or so in diameter, and abrasive suspension waterjets under about 200µm or so in diameter, diamond or other superhard material blanks of 1 to 3mm in thickness and 3 to 6mm in diameter are appropriate.

The shape of the bore 7 machined in a nozzle blank 5 depends on the application. A bore 7 for a nozzle that passes a suspension of abrasive in pressurised water will typically have a simple rounded or conical inlet, with a length equivalent to four or so bore diameters, followed by a near constant diameter bore ten to twenty diameters long.

Friction losses in each diameter of bore in the approach to a waterjet nozzle outlet are 2% or so of the waterpower at a cutting head inlet. The aim is to balance the friction energy losses in a nozzle against creating waterjet characteristics that are effective in entraining abrasive particles into a focus tube and transferring kinetic energy from the waterjet to the particles in a focus tube bore. For a cutting head that entrains abrasive as a suspension.in water, the distance between a nozzle outlet and a focus tube may only be a few waterjet diameters, making it desirable to maximise the entrainment capability of a jet on exit from a nozzle. This is achieved using a conical contraction of 15° or so, followed by a parallel section of two or so diameters before a waterjet nozzle outlet. This geometry generates a jet with a turbulent surface due to cavitation and friction.

For abrasive particles carried in air to a cutting head, a waterjet may travel ten or more jet diameters before entering a focus tube. In this situation the near parallel outlet length of a nozzle needs to be just sufficient for the nozzle outlet to withstand water pressure loads and particle impacts.

Figures 1b, 1c, 1d and 1e show alternative carrier and nozzle arrangements.

Figure 1b shows a nozzle 80 made from diamond formed as an integral layer 81 on a tungsten carbide or other substrate 82 that is brazed 6 onto carrier/holder 2.

Figure 1c shows a nozzle consisting of a piece of diamond 83, such as PCD, encased in tungsten carbide 84, which is brazed to carrier 2 via both the diamond 83 and the tungsten carbide 84. The exterior 88 of the tungsten carbide case 84 can be machined to extreme tolerances as can nozzle holder diameter 8, allowing the bore 4 in the holder 2 and the bore 7 in the diamond 83 to be pre-drilled and accurately mated during brazing. The tungsten carbide case 84 may be grown or deposited on to the diamond 83. A hard metal may in some cases be used instead of tungsten carbide or similar superhard materials.

Figure 1d shows a nozzle arrangement that is particularly appropriate for miniature cutting heads in which it is difficult to provide an adequate flow passage for abrasive in water mixtures to reach a nozzle outlet. A piece of diamond 86 is brazed on its inlet face to provide a water seal with the majority of fluid loads carried by brazed joint 87 on the sides of the diamond. The diamond may be of rectangular or other cross-section.

Figure 1e shows a nozzle formed by the deposition or growth of a CVD diamond or other superhard material layer 90 in a bore 7 within a body 91 that is joined and sealed to carrier 2 by joint 6. The layer of superhard material 90 may extend over the outlet face of the body 91 to protect the carrier 2 from erosion by abrasive particles. The joint 6 may be made to the superhard material 90 as well as to the body 91.

Instead of growing CVD diamond or other superhard material within the bore 7, a thick film may be grown on a former having a desired shape of bore 7, the former etched away, and a metal or superhard material case deposited or grown on the outside of the thick film to form the body 91.

PCD and other diamond or superhard material blanks used for nozzles 5, 80 and 83 may be cut from sheet material with an external shape that includes features that form part of passageways for abrasive in a carrier fluid to flow and be entrained into a waterjet leaving bore 7.

Where tungsten carbide is used as the superhard material, a particularly suitable form is the composite carbide sold under the Registered Trade Mark ROCTEC, as used in abrasive waterjet focus tubes by Kennametal Inc of Traverse City, Minnesota, USA.

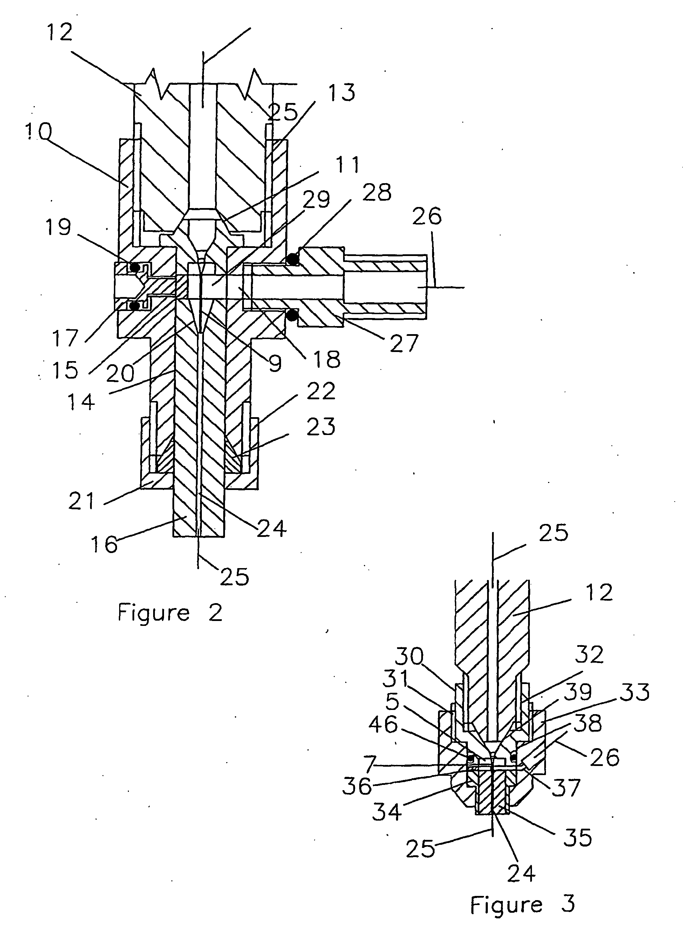

Figure 2 shows a cutting head for entraining abrasive particles carried in a carrier fluid. A waterjet nozzle 1 as shown in any of Figures 1a to 1e is located in the body 10 of a cutting head and sealed against seat 11 on collimation tube 12 by loading applied in attaching body 10 to collimation tube by thread 13. The cutting head body 10 has a bore 14 that locates outside diameter 8 of waterjet nozzle 1 and into which a spacer 15 and focus tube 16 are assembled. Locating device 17 sealed to body 10 by seal 19 positions the spacer 15 relative to a passageway 18 in body 10. A gland nut 21 with thread 22 loads sealing and retaining ring 23 to hold and to seal focus tube 16 in bore 14 of body 10.

Pressurised water source 25 to collimation tube 12 flows via passageways 3 and 4 to the nozzle bore 7 to generate a waterjet 9. The waterjet 9 passes through chamber 29 formed in spacer 15 and enters inlet 20 and bore 24 of focus tube 16. Abrasive particles in a carrier fluid 26 flow through connection 27 to a passage 18 in cutting head body 10 into chamber 29 and on into inlet 20 of focus tube 16. In the focus tube bore 24, kinetic energy is transferred from the water jet 9 to abrasive particles to give a cutting jet 25 at the focus tube 16 outlet. The longitudinal alignment of bore 7 in nozzle waterjet nozzle 1 and bore 24 in focus tube 16 is achieved by their bore axis being concentric with their diameters and their outside diameters being a close tolerance in the bore 14 of body 10. Connection 27 is sealed to the body 10 by seal 28.

Figure 3 shows a compact cutting head that has a nozzle carrier 30 directly attached to a collimation tube 12 feeding pressurised water to a cutting head. The fluid dynamics of the cutting head are basically the same as for the cutting head of Figure 2. The nozzle carrier 30 is extended on its inlet end relative to the carrier 2 of Figure 1 and has internal threaded 32 and external threaded 31 sections. The metal to metal seal 39 between the carrier 30 and the collimation tube 12 is made to a contracting bore in the carrier 30. Cutting head body 33 is attached to nozzle carrier 30 by a thread 31 in the arrangement show. The focus tube 35 is fixed in a carrier 34. Screwing body 33 onto nozzle carrier 30 with thread 31 holds focus tube carrier 34 and spacer 36 in place.

A flow of abrasive particles in a carrier fluid 26 enters passage 37 at an angle to keep the connection to the body 33 away from abrasive reflected from workpieces. The nozzle carrier is sealed to the cutting head body 33 by seal 46.

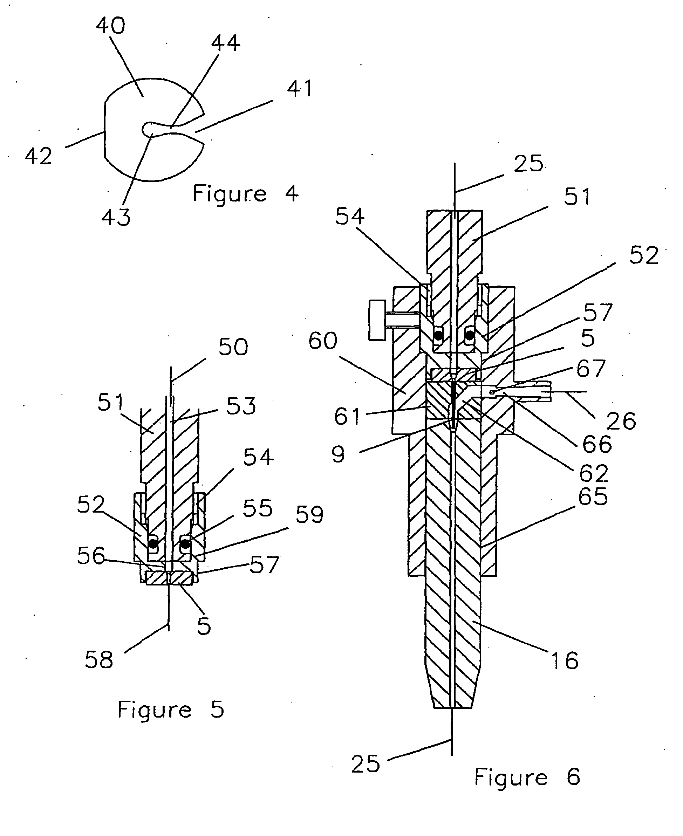

Figure 4 shows a spacer 40 suitable for the cutting head shown in Figure 3. Spacer 40 has an inlet contraction 41 that connects to passageway 37 in cutting head body 33 and a metering section 44. Metering section 44 connects to chamber 43 through which waterjet 9 flows from nozzle 7 to focus tube 35. A flat 42 or other feature on spacer 40 may match with a feature in cutting head body 33 to locate the passage 41 relative to the passageway 37. Alternatively passage 37 and chamber 39 can be machined into focus tube carrier 34 and focus tube 35.

Figure 5 shows a nozzle arrangement 59 that is particularly suited to generating small diameter abrasive waterjets. A source 50 of pressurised abrasive/water flows through passageway 53 in collimation tube 51 to a passage 56 in nozzle holder 52 to a nozzle 5. Nozzle carrier 52 is retained on collimation tube 51 by thread 54 and sealed to collimation tube 51 by seal 55. The interface between passageways 53 and 56 is such that abrasive particles cannot accumulate in dead spaces. The diameter of the diamond blank used for nozzle 5 can be chosen to protect holder 52 from abrasive when abrasive waterjet 58 is reflected from a workpiece.

Figure 6 shows an entrainment cutting head with a nozzle assembly 59 as shown in Figure 5 and a spacer 61 suitable for use when the abrasive particle carrier fluid is air. Diameter 57 on nozzle carrier 52 is concentric with the bore of nozzle 5 and locates within bore 65 of cutting head body 60 into which spacer 61 and focus tube 16 fit. Spacer 61 has passage 62 that is aligned with passage 66 in body 60. Passage 66 is connected to a source 26 of abrasive particles suspended in a carrier fluid.

One or more passages 67 in body 60 connected to passage 66 may be used to bleed off carrier fluid flow 26 when the carrier fluid flow required into focus tube 16 is insufficient to transport abrasive particles from a source to passage 66. Passage 66 may be shaped to increase particle momentum past passage 67 and thereby minimise abrasive particles entering passages 67. Bleeding off carrier fluid through passage 67 is particularly advantageous for generating cutting jets less than 500µm in diameter when the carrier fluid is air.

Below focus tube bore diameters of 100µm or so, alignment of the bores of a nozzle and a focus tube need to be held to 5µm or so. Figure 7 shows an arrangement that is particularly suited to achieving good alignment of nozzle and focus tube bores. A focus tube 35 is located in carrier 74 with an extended section 75 that is a close fit on the outside diameter 77 of nozzle carrier 1. By referencing the location of the nozzle bore to outside diameter 77 and focus tube bore to the inner bore of the extended section 75 alignment to better than 5µm can be achieved.

The nozzle carrier 1 is retained by body 72 that is attached to a collar 70 by thread 71. Collar 70 is attached to collimation tube 12 by thread 73. Thread 71 joining body 72 and collar 70 may be replaced by a quick release interrupted thread or other quick release mechanism so that by unscrewing collar 70 slightly, to release loading between nozzle carrier 1 and collimation tube 12, the body 72 can be rotated a part turn and released.

Focus tube 35 may be retained in focus tube carrier 74 by a shrink fit, adhesive, brazing or other joining and sealing means. Seal 76 seals the focus tube carrier 72 to the body 72. Location screw 78 holds a focus tube carrier 74 so that the passage 79 in focus tube carrier is aligned with passage 80. Passage 80 in body 72 connected to a source 26 of abrasive particles in a carrier fluid. The fluid dynamic operation of this cutting head is generally as described with reference to Figure 2.

## Claims

1. A nozzle assembly (1) adapted to generate a jet (9) of water or abrasive particles suspended in water for use in an abrasive waterjet cutting head, comprising
carrier means (2, 52) mountable to the cutting head and having elongate passage means (4) extending therethrough and
a nozzle element (5, 80, 84, 86, 91) comprising a superhard material having a hardness of 9 or higher on the Mohs scale, sealingly mounted to the carrier means (2, 52) by soldered or brazed joint means (6) and having an elongate profiled bore (7) extending therethrough, so connected to the passage means (4) that water or a suspension of abrasive particles in water may be passed under pressure via and through the passage means (3, 4) to the bore (7) to generate said jet (9), **characterised in that** said passage means and said profiled bore each have substantially the same diameter at a point where they meet.

2. A nozzle assembly as claimed in either claim 1 or claim 2, wherein said profiled bore tapers from a first end connected to the passage means to a second end adapted to emit the jet.

3. A nozzle assembly as claimed in any one of the preceding claims, wherein at least part of said joint means extends substantially normally to a longitudinal axis of the passage means.

4. A nozzle assembly as claimed in any one of the preceding claims, wherein an area of the joint means is at least about ten times a cross-sectional area of the passage means at a point where the passage means and the bore meet, optionally at least twenty times said cross-sectional area.

5. A nozzle assembly as claimed in any of the preceding claims, wherein the superhard material comprises diamond, cubic boron nitride, boron carbide, tungsten carbide, silicon carbide or aluminium oxide.

6. A nozzle assembly as claimed in any one of the preceding claims, wherein the superhard material comprises at least one of polycrystalline diamond, monocrystalline diamond, natural diamond or diamond produced by chemical vapour deposition.

7. A nozzle assembly as claimed in any one of the preceding claims, wherein the nozzle element comprises a block of diamond or other superhard material.

8. A nozzle assembly as claimed in claim 7%, wherein said superhard block is provided with a coating of a material reactively bonded thereto, optionally a metal such as titanium or a rare earth element such as lutetium.

9. A nozzle assembly as claimed in claim 7, wherein said superhard block is integrally bonded to a support element of tungsten carbide or other superhard material and the support element is mounted to the carrier means by said joint means.

10. A nozzle assembly as claimed in claim 7%, wherein said superhard block is provided with casing means of hard metal or a different superhard material, and said joint means connects both the casing means and said superhard block to the carrier means.

11. A nozzle assembly as claimed in any one of the preceding claims, wherein the superhard material comprises a coating or a thick film, preferably a diamond coating or thick film, supported on a nozzle element body, optionally with said coating or thick film covering or forming an interior surface of the profiled bore and a surface of the nozzle element facing away from the carrier means.

12. A nozzle assembly as claimed in any one of the preceding claims, wherein said joint means comprises a ductile filler metal, reactively bonded to the nozzle element and reactively or metallically bonded to the carrier means.

13. An abrasive water jet cutting head comprising a nozzle assembly as claimed in any one of the preceding claims.

14. A method of producing a nozzle assembly (1) for an abrasive water jet cutting head comprising the steps of
providing carrier means (2, 52) mountable to the cutting head, and having elongate passage means (4) extending therethrough;
providing a nozzle element (5, 80, 84, 86, 91) comprising a superhard material having a hardness of 9 or higher on the Mohs scale such as diamond, and having an elongate profiled bore (7) extending therethrough, wherein the passage means (3, 4) of the carrier means (2, 52) and the profiled bore (7) of the nozzle element each have substantially the same diameter at a point where they meet; and
sealingly mounting the nozzle element (5, 80, 84, 86, 91) to the carrier means (2, 52) outlet by means of a soldered or brazed joint (6), such that in use water or a suspension of abrasive particles in water may be passed under pressure via and through the passage means (3, 4) to the bore (7) to generate a jet (9) of water or abrasive particles suspended in water.

## Patentansprüche

1. Düsenanordnung (1) für die Benutzung in einem abrasiven Wasserstrahl-Schneidkopf, die dafür vorgesehen ist, einen Strahl (9) von Wasser oder von abrasiven Teilchen, die in Wasser aufgeschwemmt sind, zu erzeugen, mit
einer Trägervorrichtung (2, 52), die an dem Schneidkopf angebracht werden kann und eine längliche Durchlassvorrichtung (4), die sich **dadurch** erstreckt, aufweist, und
einem Düsenelement (5, 80, 84, 86, 91), das ein superhartes Material aufweist, das eine Härte von 9 oder höher auf der Mohs-Skala aufweist, das dichtend an der Trägervorrichtung (2, 52) durch eine weich- oder hartgelötete Verbindungsvorrichtung (6) angebracht werden kann und die eine längliche profilierte Bohrung (7), die sich **dadurch** erstreckt, aufweist, das so mit der Durchlassvorrichtung (4) verbunden ist, dass Wasser oder eine Aufschwemmung von abrasiven Teilchen in Wasser unter Druck über und durch die Durchlassvorrichtung (3, 4) zu der Bohrung (7), um den Strahl (9) zu erzeugen, geleitet werden kann,
**dadurch gekennzeichnet, dass**
die Durchlassvorrichtung und die profilierte Bohrung jeweils im Wesentlichen den gleichen Durchmesser an einem Punkt, an dem sie sich treffen, haben.

2. Düsenanordnung nach Anspruch 1 oder Anspruch 2, wobei sich die profilierte Bohrung von einem ersten Ende, das mit der Durchlassvorrichtung verbunden ist, zu einem zweiten Ende hin, das für das Aussenden des Strahls vorgesehen ist, abschrägt.

3. Düsenanordnung nach einem der vorhergehenden Ansprüche, wobei wenigstens ein Teil der Verbindungsvorrichtung sich im Wesentlichen senkrecht zu einer Längsachse der Durchlassvorrichtung erstreckt.

4. Düsenanordnung nach einem der vorhergehenden Ansprüche, wobei eine Fläche der Verbindungsvorrichtung wenigstens zehnmal die Querschnittsfläche, optional wenigstens zwanzigmal die Querschnittsfläche, der Durchlassvorrichtung an einem Punkt aufweist, an dem sich die Durchlassvorrichtung und die Bohrung treffen.

5. Düsenanordnung nach einem der vorhergehenden Ansprüche, wobei das superharte Material Diamant, kubisches Bornitrid, Bornitrid, Wolframcarbit, Siliziumcarbit oder Aluminiumoxid aufweist.

6. Düsenanordnung nach einem der vorhergehenden Ansprüche, wobei das superharte Material wenigstens einen von polykristallinem Diamant, monokristallinem Diamant, natürlichem Diamant oder Diamant, der durch chemische Gasphasenabscheidung hergestellt wurde, aufweist.

7. Düsenanordnung nach einem der vorhergehenden Ansprüche, wobei das Düsenelement einen Klotz aus Diamant oder einem anderen superharten Material aufweist.

8. Düsenanordnung nach Anspruch 7,
wobei der superharte Klotz mit einer Beschichtung aus einem Material, optional ein Metall wie Titan oder ein Selten-ErdMetall wie Lutetium, versehen ist, die durch eine Reaktion mit diesem verbunden ist.

9. Düsenanordnung nach Anspruch 7,
wobei der superharte Klotz fest mit einem Trägerelement aus Wolframcarbit oder einem anderen superharten Material verbunden ist und das Trägerelement an der Trägervorrichtung mittels der Verbindungsvorrichtung befestigt ist.

10. Düsenanordnung nach Anspruch 7,
wobei der superharte Klotz mit einer Einhüllvorrichtung aus hartem Metall oder einem anderen superharten Material versehen ist und die Verbindungsvorrichtung sowohl die Einhüllvorrichtung als auch den superharten Klotz mit der Trägervorrichtung verbindet.

11. Düsenanordnung nach einem der vorhergehenden Ansprüche, wobei das superharte Material eine Beschichtung oder einen dicken Film, vorzugsweise eine Beschichtung oder einen dicken Film aus Diamant, aufweist, die von dem Gehäuse des Düsenelements gehalten wird, wobei optional die Beschichtung oder der dicke Film eine innere Oberfläche der profilierten Bohrung abdecken oder bilden und eine Oberfläche des Düsenelements von der Trägervorrichtung wegzeigt.

12. Düsenanordnung nach einem der vorhergehenden Ansprüche, wobei die Verbindungsvorrichtung ein duktiles Füllmetall aufweist, das durch eine Reaktion mit dem Düsenelement verbunden ist und über eine Reaktion oder metallisch mit der Trägervorrichtung verbunden ist.

13. Abrasiver Wasserstrahlschneidkopf mit einer Düsenanordnung nach einem der vorhergehenden Ansprüche.

14. Verfahren zur Herstellung einer Düsenanordnung (1) für einen abrasiven Wasserstrahlschneidkopf mit den Schritten eine Trägervorrichtung (2, 52), die an dem Schneidkopf befestigbar ist und die eine längliche Durchlassvorrichtung (4), die sich **dadurch** erstreckt, aufweist, zur Verfügung zu stellen,
ein Düsenelement (5, 80, 84, 86, 91), das eine superhartes Material mit einer Härte von 9 oder höher auf der Mohs-Skala wie z.B. Diamant aufweist und das eine längliche profilierte Bohrung (7), die sich **dadurch** erstreckt, aufweist, zur Verfügung zu stellen, wobei die Durchlassvorrichtung (3, 4) der Trägervorrichtung (2, 52) und die profilierte Bohrung (7) des Düsenelements jeweils im Wesentlichen den gleichen Durchmesser an einem Punkt, an dem sie sich treffen, aufweisen, und
das Düsenelement (5, 80, 84, 86, 91) dichtend an dem Auslass der Trägervorrichtung (2, 52) über eine weich- oder hartgelötete Verbindung (6) anzubringen, so dass bei Benutzung Wasser oder eine Aufschwemmung von abrasiven Teilchen in Wasser unter Druck über und durch die Durchlassvorrichtung (3, 4) zu der Bohrung (7) geleitet werden können, um einen Strahl (9) aus Wasser oder abrasiven Teilchen, die in Wasser aufgeschwemmt sind, zu erzeugen.

## Revendications

1. Ensemble de buse (1) adapté pour générer un jet (9) d'eau ou de particules abrasives en suspension dans l'eau, destiné à être utilisé dans une tête de découpe au jet d'eau abrasif, comprenant :
des moyens de support (2, 52) pouvant être montés sur la tête de coupe et ayant des moyens de passage allongés (4) s'étendant à travers ceux-ci, et
un élément de buse (5, 80, 84, 86, 91) comprenant un matériau extra-dur ayant une dureté de 9 ou plus sur l'échelle de Mohs, monté à étanchéité sur les moyens de support (2, 52) par des moyens d'assemblage soudés ou brasés (6) et ayant un alésage profilé allongé (7) s'étendant à travers celui-ci, raccordé ainsi aux moyens de passage (4) de sorte que l'eau ou une suspension de particules abrasives dans l'eau puisse passer sous pression par le biais des et à travers les moyens de passage (3, 4) jusqu'à l'alésage (7) afin de générer ledit jet (9), **caractérisé en ce que** lesdits moyens de passage et ledit alésage profilé ont chacun sensiblement le même diamètre à un point auquel ils se rencontrent.

2. Ensemble de buse selon la revendication 1 ou la revendication 2, dans lequel ledit alésage profilé se rétrécit progressivement à partir d'une première extrémité raccordée aux moyens de passage jusqu'à une deuxième extrémité adaptée pour émettre le jet.

3. Ensemble de buse selon l'une quelconque des revendications précédentes, dans lequel au moins une partie desdits moyens d'assemblage s'étend de manière sensiblement normale jusqu'à un axe longitudinal des moyens de passage.

4. Ensemble de buse selon l'une quelconque des revendications précédentes, dans lequel une zone des moyens d'assemblage représente au moins dix fois une surface de section transversale des moyens de passage à un point où les moyens de passage et l'alésage se rencontrent, facultativement au mois vingt fois ladite surface de section transversale.

5. Ensemble de buse selon l'une quelconque des revendications précédentes, dans lequel le matériau extra-dur peut être le diamant, le nitrure de bore cubique, le carbure de bore, le carbure de tungstène, le carbure de silicium ou l'oxyde d'aluminium.

6. Ensemble de buse selon l'une quelconque des revendications précédentes, dans lequel le matériau extra-dur peut être au moins l'un parmi le diamant polycristallin, le diamant monocristallin, le diamant naturel ou le diamant produit par dépôt chimique en phase vapeur.

7. Ensemble de buse selon l'une quelconque des revendications précédentes, dans lequel l'élément de buse comprend un bloc de diamant ou d'un autre matériau extra-dur.

8. Ensemble de buse selon la revendication 7, dans lequel ledit bloc extra-dur est doté d'un revêtement d'un matériau lié par réaction à ce dernier, éventuellement un métal tel que le titane ou un lanthanide tel que le lutécium.

9. Ensemble de buse selon la revendication 7, dans lequel ledit bloc extra-dur est relié de manière solidaire à un élément de support en carbure de tungstène ou un autre matériau extra-dur et l'élément de support est monté sur les moyens de support par lesdits moyens d'assemblage.

10. Ensemble de buse selon la revendication 7, dans lequel ledit bloc extra-dur est équipée de moyens de boîtier en métal dur ou en un matériau extra-dur différent, et lesdits moyens d'assemblage raccordent à la fois les moyens de boîtier et ledit bloc extra-dur aux moyens de support.

11. Ensemble de buse selon l'une quelconque des revendications précédentes, dans lequel le matériau extra-dur comprend un revêtement ou un film épais, de préférence un revêtement en diamant ou un film épais de diamant, supporté sur un corps d'élément de buse, facultativement avec ledit revêtement ou film épais qui recouvre ou qui forme une surface intérieure de l'alésage profilé et une surface de l'élément de buse tourné dos aux moyens de support.

12. Ensemble de buse selon l'une quelconque des revendications précédentes, dans lequel lesdits moyens d'assemblage comprennent un matériau de remplissage ductile, lié par réaction à l'élément de buse et lié par réaction ou par liaison métallique aux moyens de support.

13. Tête de découpe au jet d'eau abrasif comprenant un ensemble de buse selon l'une quelconque des revendications précédentes.

14. Procédé servant à produire un ensemble de buse (1) pour une tête de découpe au jet d'eau abrasif comprenant les étapes consistant à :
pourvoir des moyens de support (2, 52) pouvant être montés sur la tête de coupe, et ayant des moyens de passage allongés (4) s'étendant à travers ces derniers ;
pourvoir un élément de buse (5, 80, 84, 86, 91) comprenant un matériau extra-dur ayant une dureté de 9 ou plus sur l'échelle de Mohs tel que le diamant et ayant un alésage profilé allongé (7) s'étendant à travers celui-ci, dans lequel les moyens de passage (3, 4) des moyens de support (2, 52) et l'alésage profilé (7) de l'élément de buse ont chacun sensiblement le même diamètre au point où ils se rencontrent ; et
monter à étanchéité l'élément de buse (5, 80, 84, 86, 91) sur la sortie des moyens de support (2, 52) au moyen d'un assemblage soudé ou brasé (6), de sorte qu'à l'usage, l'eau ou une suspension de particules abrasives puisse passer sous pression par le biais des et à travers les moyens de passage (3, 4) jusqu'à l'alésage (7) afin de générer un jet (9) d'eau ou de particules abrasives en suspension dans l'eau.
